# EUROPÄISCHE PATENTANMELDUNG

(11) **EP 3 399 459 A1**
(43) Veröffentlichungstag der Anmeldung: **07.11.2018**
(21) Anmeldenummer: 17169006.8
(22) Anmeldetag: 02.05.2017
(51) Int. Cl.: G06K 7/00, G06K 7/10

(54) **CHIPKARTENLESER MIT EINEM STARTSCHALTER**

(71) Anmelder: ddm hopt + schuler GmbH & Co. KG., 78628 Rottweil (DE)
(72) Erfinder: Hopt, Karl-Rudolf, 78628 Rottweil (DE)
(74) Vertreter: Kohler Schmid Möbus Patentanwälte

(57) **Zusammenfassung**

Bei einem Chipkartenleser (4) mit einer Kontaktiereinheit (11) zum Datenaustausch mit einer in einen Kartenschacht (9) des Chipkartenlesers (4) eingeführten Chipkarte (2) und mit einem Kartenendlagenschalter (13), der von einer bis zum Ende des Kartenschachts (9) eingeführten Chipkarte (2) betätigt wird, ist erfindungsgemäß dem Kartenendlagenschalter (13), insbesondere der Kontaktiereinheit (11), ein Startschalter (15) vorgeordnet, der von einer in den Kartenschacht (9) eingeführten Karte (2) betätigt wird.

## Beschreibung

Die vorliegende Erfindung betrifft einen Chipkartenleser mit einer Kontaktiereinheit zum Datenaustausch mit einer in einen Kartenschacht des Chipkartenlesers eingeführten Chipkarte und mit einem Kartenendlagenschalter, der von einer bis zum Ende des Kartenschachts eingeführten Chipkarte betätigt wird, sowie einen Hybrid-Kartenleser mit einem RFID-Kartenleser zum kontaktlosen Datenaustausch mit einer RFID-Karte und mit einem Chipkartenleser zum Datenaustausch mit einer Chipkarte.

Derartige Chipkartenleser und Hybrid-Kartenleser sind hinlänglich bekannt.

Im Betrieb des Hybrid-Kartenlesers ist die Steuerungssoftware stets in "Bereitstellung" zum Datenaustausch mit einer RFID-Karte, d.h., der RFID-Kartenleser überwacht die Umgebung auf Anwesenheit einer RFID-Karte. Kommt eine RFID-Karte in die Nähe des RFID-Kartenlesers, kann sie sofort bedient werden. Wird hingegen eine Chipkarte in den Chipkartenleser eingeführt, wird sie erst detektiert, wenn der Kartenendlagenschalter betätigt wird. Danach wird die Steuerungssoftware auf den Datenaustausch mit der Chipkarte umgeschaltet, und die Chipkarte kann bedient werden.

Demgegenüber ist es die Aufgabe der vorliegenden Erfindung, bei einem Chipkartenleser der eingangs genannten Art eine eingeführte Chipkarte möglichst frühzeitig zu detektieren.

Diese Aufgabe wird erfindungsgemäß dadurch gelöst, dass dem Kartenendlagenschalter, insbesondere der Kontaktiereinheit, ein Startschalter vorgeordnet ist, der von einer in den Kartenschacht eingeführten Karte betätigt wird.

Erfindungsgemäß wird der Startschalter bereits betätigt, bevor die Chipkarte ihre Datenaustauschposition erreicht hat und der Kartenendlagenschalter betätigt worden ist. Somit kann die Steuerungssoftware frühzeitig auf den Datenaustausch mit der Chipkarte umgeschaltet und die Chipkarte sofort bedient werden, wenn der Kartenendlagenschalter betätigt wird.

Besonders bevorzugt weist der Startschalter eine Kontaktfeder auf, die in den Kartenschacht hineinragt und von einer eingeführten Karte ausgelenkt wird. Dabei kann sich das freie Federende der Kontaktfeder in oder entgegen der Karteneinführrichtung erstreckt.

Vorzugsweise ragt die Kontaktfeder mit einem insbesondere konvex nach oben gebogenen, inneren Federabschnitt in den Kartenschacht hinein, wobei die von einer eingeführten Chipkarte ausgelenkte Kontaktfeder mit ihrem insbesondere konvex nach unten gebogenen, äußeren Federende an einem Gegenkontakt einer Leiterplatte anliegt und dadurch den Startschalter schließt.

Vorzugsweise ist die Kontaktfeder an einem Schalterblech angeformt, das gleichzeitig eine ESD(electrostatic discharge)-Funktion übernehmen kann.

In einer bevorzugten Erfindungsvariante ist der Startschalter als öffnender Startschalter ausgebildet, bei dem die Kontaktfeder von unten an einem übergreifenden Querkontakt anliegt, wodurch die Kontaktfeder von einer eingeführten Chipkarte vom Querkontakt abgehoben wird und der Startschalter öffnet. In einer anderen bevorzugten Erfindungsvariante ist der Startschalter als schließender Startschalter ausgebildet, bei dem unterhalb und beabstandet zu der Kontaktfeder ein Querkontakt angeordnet ist, wodurch die Kontaktfeder von einer eingeführten Chipkarte in Anlage an den Querkontakt ausgelenkt wird und der Startschalter schließt.

In einer anderen bevorzugten Ausführungsform der Erfindung ist der Startschalter als ein Mikroschalter ausgeführt, dessen Schalthebel in den Kartenschacht hineinragt. Vorteilhaft ist der Mikroschalter auf der Leiterplatte montiert, auf der auch der Chipkartenleser montiert ist, und kann durch die seitliche Führungswand des Kartenlesergehäuses in den Kartenschacht hineinragen.

Die Erfindung betrifft auch einen Hybrid-Kartenleser mit einem RFID-Kartenleser zum kontaktlosen Datenaustausch mit einer RFID-Karte, mit einem wie oben ausgebildeten Chipkartenleser und mit einer Steuerung, deren Steuerungssoftware durch Betätigung des Startschalters auf den Datenaustausch mit der Chipkarte umgeschaltet wird. Im Betrieb des Hybrid-Kartenlesers ist die Steuerungssoftware stets in "Bereitstellung" zum Datenaustausch mit einer RFID-Karte. Kommt eine RFID-Karte in die Nähe des RFID-Kartenlesers, kann sie sofort bedient werden. Wird eine Chipkarte in den Kartenschacht eingeführt, wird der Startschalter betätigt, wodurch die Steuerungssoftware früher als bisher auf den Datenaustausch mit einer Chipkarte umgeschaltet wird und der Datenaustausch sofort beginnen kann, wenn der Kartenendlagenschalter betätigt wird.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine perspektivische Ansicht des Gehäuseunterteils eines erfindungsgemäßen Chipkartenlesers mit einem ersten Startschalter;
- Fig. 2: den ersten Startschalter in einer vergrößerten Detailansicht;
- Fig. 3: eine perspektivische Ansicht des Gehäuseunterteils eines erfindungsgemäßen Chipkartenlesers mit einem zweiten Startschalter;
- Fign. 4a, 4b: den zweiten Startschalter in einer vergrößerten Detailansicht (Fig. 4a) und einem Längsschnitt (Fig. 4b);
- Fign. 5a, 5b: einen dritten Startschalter in einer vergrößerten Detailansicht (Fig. 5a) und einem Längsschnitt (Fig. 5b);
- Fig. 6: einen vierten Startschalter in einem Längsschnitt; und
- Fig. 7: einen fünften Startschalter in einer vergrößerten Detailansicht.

In der folgenden Beschreibung der Zeichnung werden für gleiche bzw. funktionsgleiche Bauteile identische Bezugszeichen verwendet.

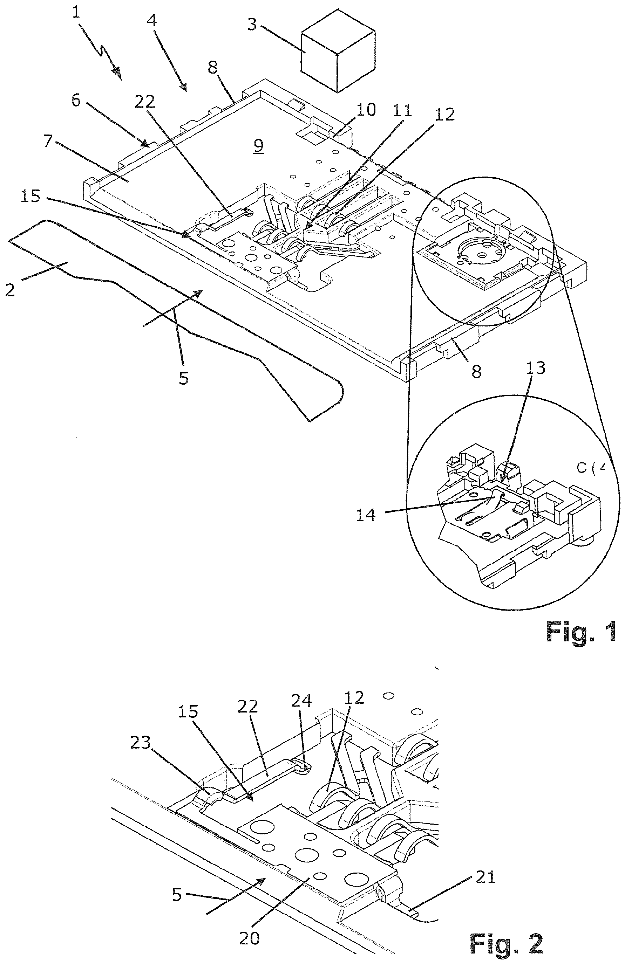

Der in **Fig. 1** gezeigte Hybrid-Kartenleser **1** dient zum Datenaustausch mit einer RFID-Karte oder mit einer Chipkarte **2** und umfasst sowohl einen RFID-Kartenleser **3** mit einer nicht gezeigten Antenne zum kontaktlosen Datenaustausch mit einer RFID-Karte als auch einen Chipkartenleser **4** zum Datenaustausch mit einer in den Chipkartenleser 4 eingeführten Chipkarte 2.

Der Chipkartenleser 4 ist ein so genannter Push/Pull-Kartenleser, bei dem die Chipkarte 2 durch den Benutzer in Einführrichtung **5** über einen Einführschlitz in den Chipkartenleser 4 bis in ihre Datenaustauschposition eingeführt und nach dem Datenaustausch vom Benutzer wieder aus dem Chipkartenleser 4 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind.

Der Chipkartenleser 4 weist ein aus einem Gehäuseunterteil **6** und einem hier nicht gezeigten Gehäuseoberteil (Gehäusedeckel) zusammengesetztes Kartenlesergehäuse auf. Der Boden **7** und zwei seitliche Führungswände **8** des Gehäuseunterteils 6 definieren zusammen mit dem Gehäuseoberteil einen Kartenschacht **9**, in den die Chipkarte 2 in Einführrichtung 5 bis in ihre Datenaustauschposition eingeschoben wird, in der sie an einer Rückwand **10** des Gehäuseunterteils 6 anliegt.

Das Gehäuseunterteil 6 weist zum Kontaktieren der elektrischen Kontaktfelder der Chipkarte 2 eine Kontaktiereinheit **11** mit acht Kontakten **12** auf, die als elastisch auslenkbare Kontaktfedern ausgebildet und in zwei in Einführrichtung 5 hintereinander angeordneten, parallelen Reihen mit jeweils vier Kontakten gruppiert sind. Die Kontakte 12 ragen in den Kartenschacht 9 bzw. in die Kartenbahn hinein, so dass sie durch die eingeführte Chipkarte 2 aus der Kartenbahn ausgelenkt werden und dann auf der Kartenoberfläche gleiten, bis sie in der Datenaustauschposition die elektrischen Kontaktfelder der eingeführten Chipkarte 2 für einen Datenaustausch kontaktieren. Das Gehäuseunterteil 6 trägt im Boden 7 einen Kartenendlagenschalter **13** mit einem Schalthebel **14**, der am Ende des Kartenschachts 9 in den Kartenschacht 9 bzw. in die Kartenbahn hineinragt. Durch eine an der Rückwand 10 anliegende Chipkarte 2 wird der Schalthebel 14 aus der Kartenbahn nach unten ausgelenkt, wodurch der Kartenendlagenschalter 13 geschaltet wird, der wiederum den Datenaustauch auslöst. Das Gehäuseunterteil 6 ist auf einer Leiterplatte (nicht gezeigt) montiert, an der die hier nicht gezeigten Anschlussenden der Kontaktiereinheit 11 und des Kartenendlagenschalters 13 angelötet sind.

Das Gehäuseunterteil 6 trägt im Boden 7 weiterhin einen der Kontaktiereinheit 11 vorgeordneten Startschalter **15**, der von einer in den Kartenschacht 9 eingeführten Chipkarte 2 betätigt wird. Wie in **Fig. 2** gezeigt, ist der Startschalter 15 als ein Schalterblech **20** mit einem festen Anschlussende **21**, welches an der Leiterplatte angelötet wird, und mit einer elastisch auslenkbaren Kontaktfeder **22** ausgebildet, deren freies Federende in Karteneinführrichtung 5 gerichtet ist. Das Anschlussende 21 ist auf der einen, in Fig. 1 rechten Seite und die Kontaktfeder 22 abgewinkelt auf der anderen, linken Seite des Kontaktblechs 20 vorgesehen. Die Kontaktfeder 22 ragt mit einem nach oben konvex gebogenen, inneren Federabschnitt **23** in den Kartenschacht 9 bzw. in die Kartenbahn hinein und wird somit von einer eingeführten Chipkarte 2 nach unten ausgelenkt, bis das nach unten konvex gebogene, äußere Federende **24** an einer Gegenkontaktfläche (Lötpad) der Leiterplatte anliegt und dadurch der Startschalter 15 geschlossen wird. Das Schalterblech 20 ist bereichsweise vom Kunststoff des Gehäuseunterteils 6 umspritzt und über das Anschlussende 21 an Erdungspotential angeschlossen, so dass von einer elektrostatisch aufgeladenen Chipkarte 2 Spannung über die Kontaktfeder 22 abfließen kann, bevor die Chipkarte 2 von der Kontaktiereinheit 11 kontaktiert wird (ESD-Funktion).

Im Betrieb des Hybrid-Kartenlesers 1 ist die Software einer Steuerung stets in "Bereitstellung" zum Datenaustausch mit einer RFID-Karte, d.h., der RFID-Kartenleser 3 überwacht die Umgebung auf Anwesenheit einer RFID-Karte. Kommt eine RFID-Karte in die Nähe des RFID-Kartenlesers 3, kann sie sofort bedient werden. Wird eine Chipkarte 2 in den Kartenschacht 9 eingeführt, wird der Startschalter 15 betätigt, wodurch die Steuerungssoftware früher als bisher auf den Datenaustausch mit einer Chipkarte 2 umgeschaltet wird und der Datenaustausch sofort beginnen kann, wenn der Kartenendlagenschalter 13 betätigt worden ist.

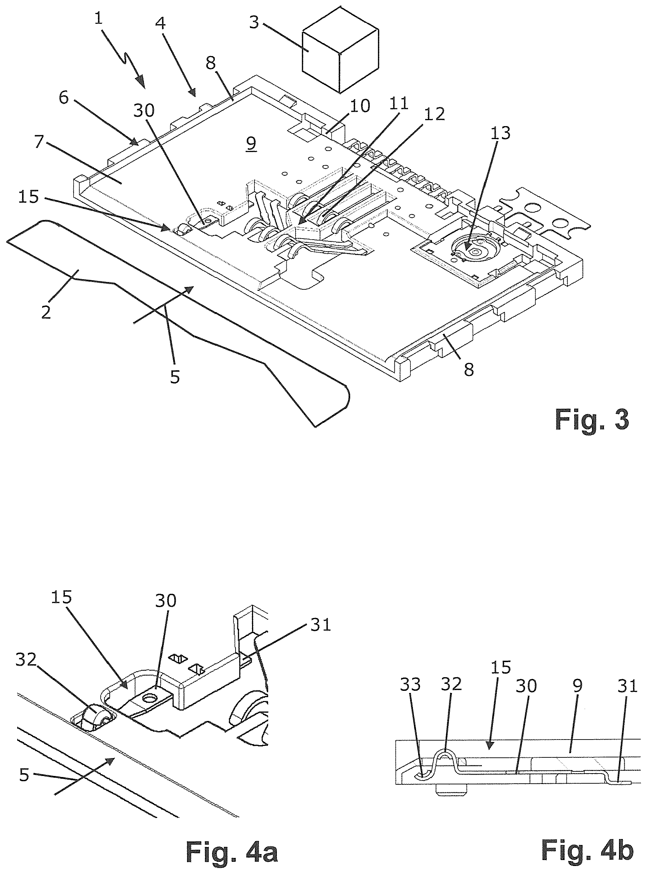

Vom Hybrid-Kartenleser 1 der Fig. 1 unterscheidet sich der in **Fig. 3** gezeigte Hybrid-Kartenleser 1 lediglich dadurch, dass hier der Startschalter 15 durch eine elastisch auslenkbare Kontaktfeder **30** gebildet ist, deren freies Federende entgegen der Karteneinführrichtung 5 gerichtet ist. Wie in **Fign. 4a, 4b** gezeigt, ist die Kontaktfeder 30 an ihrem festen Ende vom Kunststoff des Gehäuseunterteils 6 umspritzt und weist ein hinteres Anschlussende **31** auf, welches an der Leiterplatte angelötet wird. Die Kontaktfeder 31 ragt mit einem nach oben konvex gebogenen, inneren Federabschnitt **32** in den Kartenschacht 9 bzw. in die Kartenbahn hinein und wird somit von einer eingeführten Chipkarte 2 nach unten ausgelenkt, bis das nach unten konvex gebogene, äußere Federende **33** an einer Gegenkontaktfläche (Lötpad) der Leiterplatte anliegt und dadurch der Startschalter 15 geschlossen wird. Dies wird von der Steuerung erkannt, die dann die Steuerungssoftware auf den Datenaustausch mit der Chipkarte 2 umschaltet.

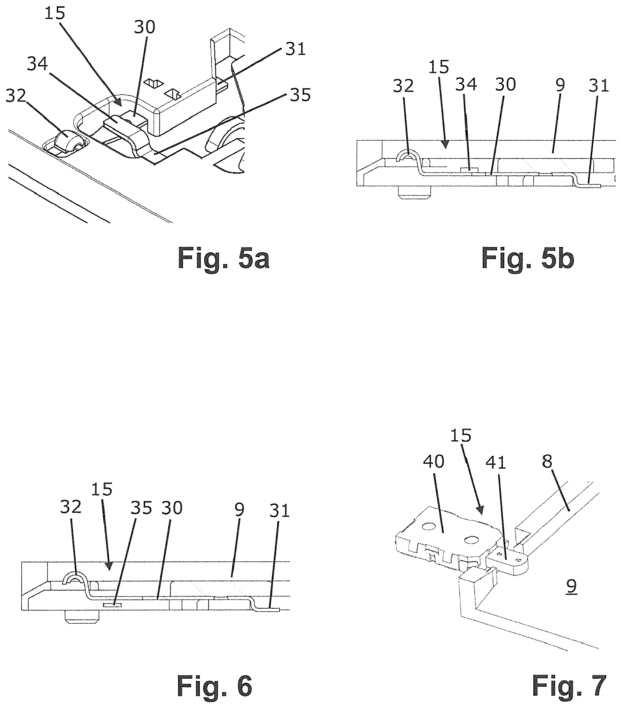

Vom Startschalter der Fign. 4a, 4b unterscheidet sich der in **Fign. 5a, 5b** gezeigte Startschalter 15 dadurch, dass hier die Kontaktfeder 30 nur das nach oben konvex gebogene, äußere Federende 32 aufweist und mit ihrem mittleren Federabschnitt von unten an einem übergreifenden Querkontakt **34** anliegt. Der Querkontakt 34 hat ein Anschlussende **35** auf, welches an der Leiterplatte angelötet wird. Die Kontaktfeder 30 ragt mit dem äußeren Federende 32 in den Kartenschacht 9 bzw. in die Kartenbahn hinein und wird somit von einer eingeführten Chipkarte 2 nach unten ausgelenkt, wodurch die Kontaktfeder 30 von dem Querkontakt 34 abhebt und dadurch der Startschalter 15 geöffnet wird. Dies wird von der Steuerung erkannt, die dann die Steuerungssoftware auf den Datenaustausch mit der Chipkarte 2 umschaltet.

Vom öffnenden Startschalter der Fign. 5a, 5b unterscheidet sich der **Fig. 6** gezeigte, schließende Startschalter 15 dadurch, dass hier der Querkontakt **35** unterhalb und beabstandet zu der Kontaktfeder 30 angeordnet ist. Die Kontaktfeder 30 ragt mit dem äußeren Federende 32 in den Kartenschacht 9 bzw. in die Kartenbahn hinein und wird somit von einer eingeführten Chipkarte 2 nach unten ausgelenkt, bis die Kontaktfeder 30 am Querkontakt 35 anliegt und dadurch der Startschalter 15 geschlossen wird. Dies wird von der Steuerung erkannt, die dann die Steuerungssoftware auf den Datenaustausch mit der Chipkarte 2 umschaltet.

Bei dem in **Fig. 7** gezeigten Startschalter 15 handelt es sich um einen Mikroschalter **40,** der an der Leiterplatte angelötet ist und dessen Schalthebel **41** - durch die Führungswand 8 hindurch - seitlich in den Kartenschacht 9 bzw. in die Kartenbahn hineinragt. Der Mikroschalter 40 wird somit von einer eingeführten Chipkarte 2 betätigt, was von der Steuerung erkannt wird, die dann die Software auf den Datenaustausch mit der Chipkarte 2 umschaltet.

## Patentansprüche

1. Chipkartenleser (4) mit einer Kontaktiereinheit (11) zum Datenaustausch mit einer in einen Kartenschacht (9) des Chipkartenlesers (4) eingeführten Chipkarte (2) und mit einem Kartenendlagenschalter (13), der von einer bis zum Ende des Kartenschachts (9) eingeführten Chipkarte (2) betätigt wird,
**dadurch gekennzeichnet,**
**dass** dem Kartenendlagenschalter (13), insbesondere der Kontaktiereinheit (11), ein Startschalter (15) vorgeordnet ist, der von einer in den Kartenschacht (9) eingeführten Karte (2) betätigt wird.

2. Chipkartenleser nach Anspruch 1, **dadurch gekennzeichnet, dass** der Startschalter (15) eine Kontaktfeder (22; 30) aufweist, die in den Kartenschacht (9) hineinragt und von einer eingeführten Karte (2) ausgelenkt wird.

3. Chipkartenleser nach Anspruch 2, **dadurch gekennzeichnet, dass** sich das freie Federende der Kontaktfeder (22; 30) in oder entgegen der Karteneinführrichtung (5) erstreckt.

4. Chipkartenleser nach Anspruch 2 oder 3, **dadurch gekennzeichnet, dass** die Kontaktfeder (22; 30) mit einem insbesondere konvex nach oben gebogenen, inneren Federabschnitt (23; 32) in den Kartenschacht (9) hineinragt und die von einer eingeführten Chipkarte (2) ausgelenkte Kontaktfeder (22) mit ihrem insbesondere konvex nach unten gebogenen, äußeren Federende (24, 33) an einem Gegenkontakt einer Leiterplatte anliegt.

5. Chipkartenleser nach einem der Ansprüche 2 bis 4, **dadurch gekennzeichnet,**
**dass** die Kontaktfeder (22; 30) ein festes Anschlussende (21; 31) aufweist, das an eine Leiterplatte angelötet wird.

6. Chipkartenleser nach einem der Ansprüche 2 bis 5, **dadurch gekennzeichnet,**
**dass** die Kontaktfeder (22) an einem Schalterblech (20) angeformt ist.

7. Chipkartenleser nach einem der Ansprüche 2 bis 6, **dadurch gekennzeichnet,**
**dass** die Kontaktfeder (30) von unten an einem übergreifenden Querkontakt (34) anliegt und die von einer eingeführten Chipkarte (2) ausgelenkte Kontaktfeder (30) von dem Querkontakt (34) abgehoben ist.

8. Chipkartenleser nach einem der Ansprüche 2 bis 6, **dadurch gekennzeichnet,**
**dass** unterhalb und beabstandet zu der Kontaktfeder (30) ein Querkontakt (35) angeordnet ist und die von einer eingeführten Chipkarte (2) ausgelenkte Kontaktfeder (30) an dem Querkontakt (35) anliegt.

9. Chipkartenleser nach Anspruch 1, **dadurch gekennzeichnet, dass** der Startschalter (15) als ein Mikroschalter (40) ausgeführt ist, dessen Schalthebel (41) in den Kartenschacht (9) hineinragt.

10. Hybrid-Kartenleser (1) mit einem RFID-Kartenleser (3) zum kontaktlosen Datenaustausch mit einer RFID-Karte, mit einem Chipkartenleser (4) nach einem der vorhergehenden Ansprüche und mit einer Steuerung, deren Steuerungssoftware durch Betätigung des Startschalters (15) auf den Datenaustausch mit der Chipkarte (2) umgeschaltet wird.
